# EUROPÄISCHE PATENTSCHRIFT

(11) **EP 0 640 415 B1**
(45) Veröffentlichungstag und Bekanntmachung des Hinweises auf die Patenterteilung: **03.02.1999**
(21) Anmeldenummer: 94113097.3
(22) Anmeldetag: 23.08.1994
(51) Int. Cl.: B21D 1/06

(54) **Vorrichtung zum Beheben von Schäden an Autokarosserieteilen**
Device for repairing damage to vehicle body parts
Dispositif pour la réparation des dégâts aux carrosseries d'automobiles

(30) Priorität: 30.08.1993 DE 9312980 U
(43) Veröffentlichungstag der Anmeldung: 01.03.1995
(73) Patentinhaber: M V Marketing und Vertriebs-GmbH & Co. KG Wieländer + Schill, D-78054 Villingen-Schwenningen (DE)
(72) Erfinder: Fugel, Martin, D-88048 Friedrichshafen (DE)
(74) Vertreter: Blumbach, Kramer & Partner GbR

(56) Entgegenhaltungen:
- EP-A- 0 544 191
- FR-A- 2 550 971
- US-A- 3 801 772
- US-A- 4 376 385
- US-A- 5 203 196

## Beschreibung

Die Erfindung betrifft generell eine Vorrichtung zur Verformung von dünnwandigen Bauteilen und im Besonderen eine Vorrichtung zum Beheben von Schäden an Autokarosserieteilen mit einem an dem zu verformenden Bauteil anschweißbaren Halteglied und einer Zugvorrichtung zum Aufbringen von Zugkräften auf das Halteglied.

Herkömmlich wurde zum Beheben von Karosserieschäden, wie diese z.B. bei Hagelschlag, schwerem Steinschlag, bei tieferen Kratzern oder langgestreckten Beulen auftreten, das Metall des Bleches freigelegt, ein Zugstück auf das freigelegte Blech geschweißt und mit einer Zugvorrichtung eine Rückverformung der beschädigten Stelle bewirkt. Dieser Vorgang wurde in zeitaufwendiger Weise schrittweise solange wiederholt, bis der Schaden im Blechbereich annähernd behoben und einer Weiterbehandlung mittels Spachteln und/oder Lackieren zugänglich war.

Die gattungsbildende FR-A-2550971 offenbart eine Vorrichtung des eingangs erwähnten Typs.

Der Erfindung liegt die Aufgabe zugrunde, bei einer Vorrichtung der im Oberbegriff des Anspruchs 1 genannten Art das Arbeitsergebnis zu verbessern und deren Verwendbarkeit universeller zu machen.

Diese Aufgabe wird mit den Merkmalen des Anspruchs 1 gelöst.

Mit dem erfindungsgemäßen einstellbaren Teifenanschlag zum Erreichen einer definierten Endstellung der Zugvorrichtung kann das Nullniveau der ursprünglichen Karosserieform oder auch ein definiertes Überstrecken eingestellt werden. Bei verrundeten, beschädigten Stellen kann der der Rundung entsprechenden längeren Wegstrecke und somit größeren Ziehtife entsprechend Rechnung getragen werden. Erreicht die Zugvorrichtung mit dem einstellbaren Tiefenanschlag eine definierte Endstellung, können durch entsprechende Einstellung verschieden große Halteglieder eingesetzt werden. Da hierdurch im wesentlichen beliebige Anschweißteile als Halteglieder verwendbar sind, können entweder speziell an den Schaden angepasste Halteglieder oder preisgünstig übliche metallische Unterlegscheiben verwendet werden.

Mit einer Einrichtung zum Zuführung von Kühlmittel, insbesondere von Luft, zu der erwärmten rückverformten Stelle läßt sich durch das definierte Abkühlen in der Art eines "Abschreckens" die damit einhergehende Festigkeitsverbesserung positiv für die Stabilität des rückverformten Bereichs nutzen. Üblicherweise treten die beim Stand der Technik eingetragenen mechanischen Spannungen, die unter Umständen ein thermisches Nachbehandeln erfordern, bei der erfindungsgemäßen Vorrichtung nur in geringerem Maß oder überhaupt nicht auf.

Wird die motorische Zugvorrichtung pneumatisch betrieben, kann die Kühlluft auf einfache Weise unter Verwendung der eingesetzten Druckluftquelle zugeführt werden. Die Arbeit wird hierdurch nochmals wesentlich beschleunigt, direkt nach dem Ziehen wird der gesamte rückverformte Bereich abgekühlt und es kann unmittelbar neben der bearbeiteten Stelle mit der Weiterbehandlung fortgefahren werden. Dies macht die erfindungsgemäße Vorrichtung nochmals besser geeignet, auch großflächigere Schäden zu beheben.

Rückseitenschäden werden stark vermindert; unvermeidliche Lackschädigungen der Rückseite des zu bearbeitenden Bereichs bleiben geringer und die Gefährdung beispielsweise von benachbarten Kunststoffteilen, eingeklebten Dachhimmeln, in der Nähe liegenden kraftstoffführenden Teilen wird durch die sofortige Abkühlung stark gemindert.

Eine motorisch betätigte Einrichtung zum Lösen des angeschweißten Haltegliedes beschleunigt den Arbeitsvorgang nochmals ohne den Bediener zusätzlich zu belasten.

Wird lediglich ein einziges, manuell betätigbares Bedienungselement für die Funktionsabläufe des Anschweißens, des Ziehens, des Kühlens, des Abdrehens und/oder der Rückkehr in die Anfangsposition vorgesehen, wird sich aufgrund der wesentlich verbesserten Bedienbarkeit bereits nach kurzem Umgang mit der Vorrichtung ein reflexartiges und zügiges Arbeiten einstellen.

In vorteilhafterweise ist dabei das manuell betätigbare Bedienungselement ein Bedienungshebel oder Drücker der aufeinanderfolgende, den einzelnen Funktionsabläufen zugeordnete Betätigungsstellungen aufweist. Durch diese den einzelnen Funktionsabläufen zugeordneten Betätigungsstellungen kann der Bediener auf einfache Weise die vollständige manuelle Kontrolle über sämtliche Funktionsabläufe behalten.

Mit einer in oder an einen Griffteil der erfindungsgemäßen Vorrichtung angeordneten pneumatischen Steuerungsbaugruppe, welche die pneumatischen Steuerungsvorgänge durch die axiale Stellung eines einzigen pneumatischen Steuerungsorgans bewirkt, läßt sich ein mechanisch zuverlässiger und kompakter Aufbau erreichen, der eine Automatisierung vorbereitend unterstützt. Zur Automatisierung bedarf es dann lediglich einer weiteren Funktionsbaugruppe, welche die Betätigung des einzigen pneumatischen Steuerorgans und eventuell eines elektrischen Versorgungsgerätes für das Anschweißen automatisiert bewirkt.

Mit einer Einrichtung für die selbsttätige Zufuhr von Kühlluft bei Erreichen der Endstellung der Zugvorrichtung kann eine Betätigungsstellung des Handhebels oder Drückers weggelassen und die Bedienung weiter vereinfacht werden. Bewirkt diese oder eine weitere Einrichtung auch selbsttätig das zeitlich nachfolgende Ablösen des Haltegliedes, bedarf es nur noch einer einzigen Betätigung des Bedienelementes für den vollständigen Funktionsablauf der Rückverformung nach dem Anschweißen.

Ein definiertes, vorprogrammierbares zeitliches Zieh- und Abkühlverhalten, das stets den optimalen Ablauf sichert, kann alternativ erreicht werden mit einer elektrischen und/oder pneumatischen Steuereinrichtung, die einen automatisierten Ablauf der Funktionsabläufe Anschweißen, Ziehen, Kühlen, Abdrehen und/oder Rückkehr in die Anfangsposition bewirkt.

Erfolgt das Ziehen des Haltegliedes nach dem Anschweißen ruckfrei, vorzugsweise durch eine in der pneumatischen Zuleitung zu der pneumatisch betätigten Zugvorrichtung angeordnete Drossel, werden Kraftspitzen durch weiches Anlaufen des Ziehvorgangs vermieden und wird das ungewollte Ablösen des Haltegliedes ausgeschlossen. Das anfänglich sanfte Ziehen trägt dem heißesten Zustand des zu verformenden Materials Rechnung und vermeidet ungewollte Überstreckungenn im Bereich der Anschweißstelle.

Werden beim Ziehen verschiedene Fußteile in der Zugvorrichtung eingesetzt, die sich mit verschiedener Auflageform gegen das zu verformende Bauteil abstützen, kann eine Anpassung an verschiedene Schadensformen, wie z.B. an kreisrunde, langgestreckte oder andersförmige Schädigungen, vorgenommen werden.

In einem System zur Bearbeitung von dünnwandigen Bauteilen kann mit der erfindungsgemäßen Vorrichtung und einem erfindungsgemäßen Versorgungsgerät für das elektrische Schweißen ein definiert einstellbarer Wärmeeintrag mit vorgebbarem Zeitverhalten erreicht werden. Hierdurch kann die Erwärmung sowie deren Zeitverhalten im Hinblick auf die Blechstärke, des Materials und/oder die Größe des Schadens optimal eingestellt werden.

Obwohl die erfindungsgemäße Vorrichtung mit Standardanschlüssen für das elektrische Schweißen sowie einem Standardanschluß für eine pneumatische Versorgungseinrichtung bereits vollständig funktionstüchtig ist, kann alternativ bei dem vorstehend genannten System das Versorgungsgerät auch elektrische oder elektronische Steuereinrichtungen für die einzelnen Funktionsabläufe enthalten.

Die Erfindung wird nachfolgend anhand der beigefügten Zeichnungen unter Bezugnahme auf bevorzugte Ausführungsformen im einzelnen beschrieben.
Es zeigen:
- Fig. 1: eine perspektivische Ansicht einer im Querschnitt in Längsrichtung dargestellten erfindungsgemäßen Vorrichtung schräg von vorn,
- Fig. 2: die in Fig. 1 dargestellte Vorrichtung in einer Aufsicht von der Seite auf den Querschnitt in Längsrichtung,
- Fig. 3: eine schematische Darstellung grundlegender Funktionsbaugruppen der in den Fig. 1 und 2 dargestellten Vorrichtung,
- Fig. 4: den Vorgang des Anschweißens des Haltegliedes bei einer im Querschnitt in Längsrichtung dargestellten Vorrichtung,
- Fig. 5: den Vorgang des Ziehens und die damit einhergehende Rückverformung des bearbeiteten Bauteils,
- Fig. 6: das Zuführen von Kühlluft zum Abkühlen des rückverformten Bauteils,
- Fig. 7: den Vorgang des Ablösens des Haltegliedes vom rückverformten Bauteil durch dessen Abdrehen,

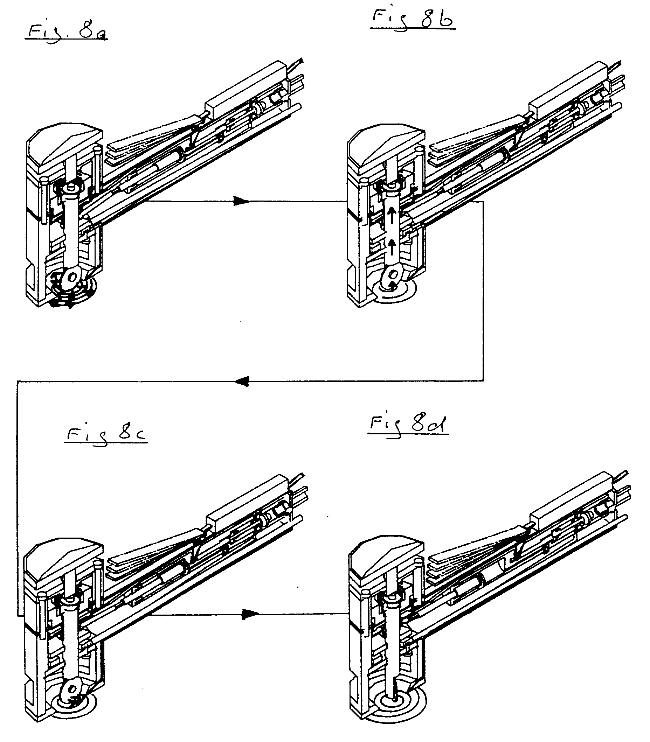

- Fig. 8a bis d: die Funktionsabläufe der Fig. 4 bis 7 in ihrer Abfolge in perspektivischer Darstellung.

Lediglich zum Zwecke der Klarheit ist keine der Figuren maßstabsgerecht gezeigt. Sämtliche Darstellung beziehen sich auf die wesentlichen Funktionsbaugruppen bevorzugter Ausführungsformen ohne zusätzliche Gehäuseverkleidungen oder weitere Hand- oder Haltegriffe, die von einem Fachmann auf diesem Gebiet einfach anzubringen sind.

Die im ganzen mit 1 bezeichnete Vorrichtung zum Verformen von dünnwandigen Bauteilen umfaßt ein Kopfteil 2 sowie ein an diesem senkrecht in etwa dessen Mitte befestigtes Griffteil 3.

Innerhalb des Kopfteils 2 ist im wesentlichen eine motorisch betätigbare Zugvorrichtung 4, eine motorisch betätigbare Einrichtung 5 zum Lösen des Haltegliedes 7 sowie ein Anschlag 6 für die Zugvorrichtung 4 angeordnet. In oder an dem Griffteil 2 sind im wesentlichen ein manuell betätigbares Bedienelement 8, eine pneumatische Steuerungsbaugruppe 9, eine Einrichtung 14 für das selbsttätige Zuführen von Kühlmittel und/oder das selbsttätige Bewirken des Ablösens des Haltegliedes 7 und eine elektrische Schalteinrichtung 10 angeordnet. In dem Griffteil 3 und in dem Kopfteil 2 angeordnet, sind eine elektrische Zuführungseinrichtung 11 in Form einer Zuleitung 48 für das elektrische Schweißen des Haltegliedes 7 an das zu verformende Bauteil 12.

Unterhalb des Kopfteils 2 ist ein Fußteil 26 reibschlüssig gehalten, aufgeschraubt, durch die Rastkraft eines Rastelementes und/oder durch ein Bajonett auswechselbar befestigt. Die Auflagefläche 51 des Fußteils 26, mit welchem sich die Vorrichtung 1 gegenüber dem Bauteil 12 abstützt, weist je nach Anwendungsfall eine Öffnung mit runder, langgestreckter, ovaler oder polygonaler Form auf und kann entsprechend dem zu bearbeitenden Schaden durch Austausch des Fußteils 26 optimal angepaßt werden.

Das insgesamt im wesentlichen zylindrische Kopfteil 2 weist an seinem oberen Ende ein Einstellrad 15 für den Tiefenanschlag 6 auf, das in etwa den gleichen Durchmesser wie das Kopfteil 2 hat. Das Einstellrad 15 ist mit einem Gewindebolzen oder einer Einstellschraube 16 mit Feingewinde verbunden, der/die in einem Gewinde 17 des Kopfteils 2 verdrehbar und somit axial einstellbar gehalten ist.

Ein Kolben 18 ist in einer Zylinderkammer 19 axial verschieblich gehalten. Im mittleren Bereich des Kolbens 18 ist ein drehbares Lager 20 angeordnet, an dessen innerer Lagerschale eine Zugstange 21 so angebracht ist, daß diese gegenüber dem Kolben 18 verdrehbar, jedoch nicht axial verschieblich gehalten ist. Am unteren Ende der Zugstange 21 ist das Halteglied 7, vorzugsweise durch eine Verschraubung gehalten.

Unterhalb des Kolbens 18 ist eine Membran 22 außenseitig mit dem Gehäuse des Kopfteils 2 und in der Mitte mit dem Kolben 18 so verbunden, daß diese den zylindrischen Raum 23 nach oben hin beweglich und dichtend abschließt. Unterhalb der Membran 23 ist eine tellerförmige Stützscheibe 53 an der Zugstange 21 gehalten. Der zylindrische Raum 23 umgibt die Zugstange 21 und ist gegenüber dieser fluiddicht ausgebildet.

Eine pneumatische Zuleitung 24 verbindet den zylindrischen Raum 23 mit der pneumatischen Steuerungsbaugruppe 9 so, daß der Kolben 18 entgegen der Kraft der sich stirnseitig an diesem abstützenden Druckfeder 25 bei Zuführung eines Fluids durch die Zuleitung 24 motorisch wirkend in die obere axiale Endstellung bewegt wird. Hierbei liegt am Tiefenanschlag 6 das obere Ende der Zugstange 21 an. Zur Umgebung kann das unter Druck stehende Fluid aus dem Raum 23 durch die Zuleitung 24 entweder nach dem Öffnen des an späterem Ort detailierter beschriebenen Ventils 52 oder ohne dieses Ventil dauernd in geringerer Menge entlang der Zuleitung 43 abgeführt werden und es begibt sich dabei der Kolben 18 sowie die daran befestigte Zugstange 21 in die untere axiale Endstellung, die ursprüngliche Ausgangsposition.

Diese untere axiale Endstellung ist so gewählt, daß die Zugstange 21 mit dem daran befestigten Halteglied 7 das Fußteil der Vorrichtung 26 weit nach vorn überragt. Die Länge des Hervorstehens kann durch Wahl des Durchmessers oder der Größe des Haltegliedes 7 beeinflusst werden, beträgt vorzugsweise jedoch mindestens ca. 3 mm, 5 mm, 8 mm oder mehr; so daß übliche Schadenstiefen in jedem Falle sicher von der erfindungsgemäßen Vorrichtung 1 erfaßt werden können.

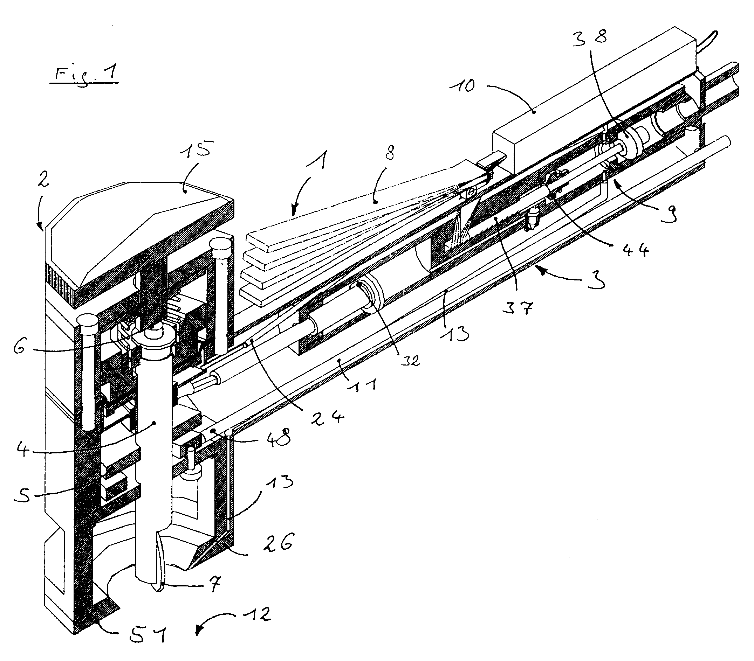

Im mittleren Bereich ist an der drehbar gehaltenen Zugstange 21 ein Teller 27 befestigt, der ein außermittiges drehbares und verkippares Lager für die Halterung eines Pleuel 28 aufweist. Der Pleuel 28 ist an seinem vorderen Ende drehbar und verkippbar außermittig mit dem Teller 27 und an seinem hinteren Ende drehbar und kippbar mit einer Druck/Zugstange 29 des Pneumatikkolbens 30 verbunden. Der Pneumatikkolben 30 ist im pneumatischen Zylinder 31 durch die Kraft der Druckfeder 32 ohne Zuführung eines unter Druck stehenden Fluids entlang der Zuleitung 33 in seiner rechten axialen Endstellung gehalten. Die in den Figuren nur schematisch dargestellte Druckfeder 32 ist vorzugsweise eine ermüdungsfreie Spiralfeder, deren Kräfte so dimensioniert sind, daß entgegen mechanischer Reibung die rechte axiale Endstellung des Kolbens 30 stets erreicht wird, wenn in dem Zylinder 31 Umgebungsdruck herrscht, wohingegen der Teller 27 und die Zugstange 21 verdreht werden, wenn über die Zuleitung 33 unter Druck stehendes Fluid zugeführt wird. Hierbei ist sichergestellt, daß bei normalen Arbeitsdrucken von 4 bis 10 bar, vorzugsweise 6 bis 10 bar, durch die Übersetzung des exzentrisch am Teller 27 angreifenden Pleuels 28 sowie durch den Durchmesser des Kolbens 30 und des Zylinders 31 stets ein sicheres Abscheren des Haltegliedes 7 am zu verformenden Bauteil 12 erreicht wird. Dies ist dann der in den Fig. 1, 2 und 7 dargestellte Zustand, bei welchem die Rückverformung des Bauteils 12 eingetreten und das Halteglied 7 abgeschert worden ist.

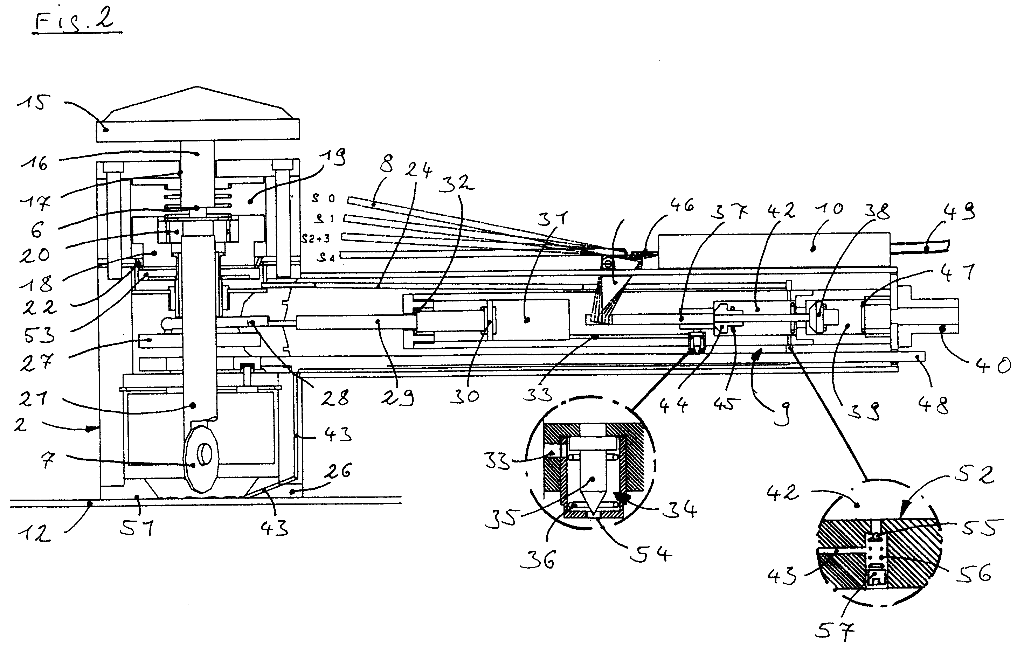

Die Zuleitung 33 ist zum selbsttätigen Bewirken des Abscherens mit einem auch als Überdruckventil wirkenden Mehrfunktionsventil 34 verbunden, welches in Fig. 2 zusätzlich vergrößert dargestellt ist. Das Mehrfunktionsventil 34 verbindet die Zuleitung 33 mit der pneumatischen Steuerungsbaugruppe 9 und kann, wie an späterem Ort genauer beschrieben, zeitweilig an seinem Eingang mit der Zuleitung 24 zum zylindrischen Raum 23 kommunizieren. Hierdurch wird eine Einrichtung 5 zum selbsttätigen Lösen des Haltegliedes 7 gebildet. Beim Erreichen des Tiefenanschlags 6 baut sich im zylindrischen Raum 23 sowie im Bereich der Zuleitung 24 und in der Kammer 42 ein Druckanstieg auf, der dann zum Öffnen des Mehrfunktionsventils 34 führt, wenn in der Stellung S4 des Bedienelementes 8 das kegelförmige Dichtelement 44 nach rechts zurückgeschoben ist und die Kammer 42 mit dem Mehrfunktionsventil 34 kommunizieren läßt.

Hierbei tritt der Ventilkörper 35 aus seiner dichtenden Anlage an dem in Fig. 2 dargestellten oberen Anschlag entgegen der Kraft der Druckfeder 36 zurück, gibt die Zuleitung 33 frei und verschließt mit seinem unteren konischen Ende die Öffnung 54 fluiddicht, so daß der daraufhin im Zylinder 31 erfolgende Druckanstieg zur vorstehend beschriebenen Verdrehung des Tellers 27 und der Zugstange 21 führt. Wird das Bedienelement 8 in die Stellung S2+3 zurückgeschwenkt, dichtet das Dichtelement 44 die Kammer 42 gegen das Ventil 34 fluiddicht ab. Es tritt dann das Dichtelement 35 durch die Wirkung der Druckfeder 36 an seinen oberen Anschlag zurück, wobei die untere Öffnung 54 freigegeben wird, durch welche nachfolgend der Zylinder 31 entlüftet wird. Unter Einwirkung der Druckfeder 32 nimmt dabei der Kolben 30 und somit die Einrichtung 5 zum Lösen des Haltegliedes ihre ursprüngliche Ausgangsstellung ein.

Innerhalb der pneumatischen Steuerungsbaugruppe 9 ist ein stabförmiges pneumatisches Steuerungsorgan 37 axial verschieblich gehalten. An der linken Stirnseite des Steuerungsorgangs 37 liegt der kürzere Hebelarm 50 des verschwenkbaren manuellen Bedienelementes 8 an, welches die vier in den Figuren mit S0 bis S4 bezeichneten Betätigungs-Stellungen aufweist. Am rechten hinteren Ende des stabförmigen Elementes 37 ist mit diesem ein kegelförmiges Dichtelement 38 dichtend verbunden. An dem in den Figuren rechtsseitigen Ende des Dichtelementes 38 greift eine in der Kammer 39 angeordnete schematisch dargestellte Druckfeder 41 an.

Entsprechend der Stellung des pneumatischen Steuerungsorgangs 37 und somit des Dichtelementes 38 kann in den Betätigungs-Stellungen S2+3 und S4 von der pneumatischen Zuführung 40 zugeführte Luft aus der Kammer 39 in die Kammer 42 geleitet werden. Die pneumatischen Zuführung 40 ist während des Betriebs in bekannter Weise mit einer beliebigen geeigneten Druckluftquelle verbunden.

Beim Eindrücken des Bedienelementes 8 in die Stellung S2+3, wird das kegelförmige Dichtelement 38 in der Kammer 39 so nach hinten geschoben, daß die in die Kammer 42 einströmende Luft in bereits beschriebener Weise über die Zuleitung 24 das Zurücktreten der Zugstange 21 und danach in Stellung S4 das Abdrehen des Haltegliedes 7 bewirkt.

Hierbei entströmt bei einer ersten Ausführungsform der Kammer 42 Kühlluft entlang der Zuleitung 43, die einen Teil der Einrichtung 13 zum Zuführen von Kühlmittel bildet. Die Zuleitung 43 erstreckt sich von der Kammer 42 bis zu dem Fußteil 26 und durch das Fußteil 26, von welchem aus die Kühlluft auf das zu bearbeitende und durch das Anschweißen erhitzte Werkstück 12 geführt wird.

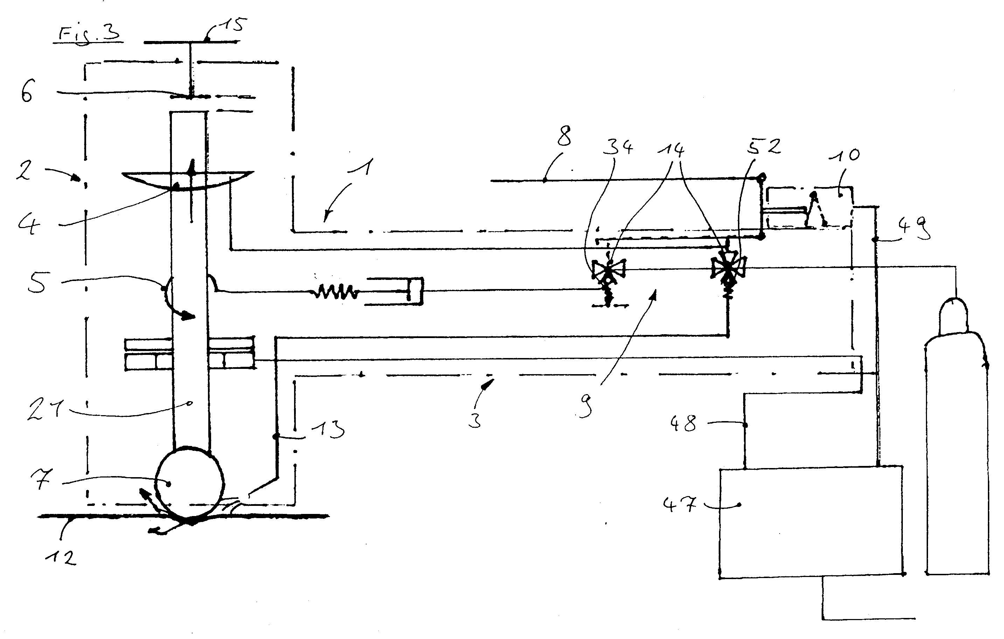

In weiterer Ausgestaltung ist in der Zuleitung 43 ein weiteres, in Fig. 2 vergrößert und Fig. 3 lediglich schematisch dargestelltes Überdruckventil 52 angeordnet, welches ein Zuführen von Kühlluft erst nach Erreichen der oberen Endstellung der Zugstange 21 und vor Erreichen des Überdrucks für das Ablösen des Haltegliedes 7 bewirkt. Das Überdruckventil 52 umfasst eine Kugel 55, die durch die Druckfeder 56 in ihrer oberen Stellung dichtend an einer Öffnung zur Kammer 42 gehalten ist. Durch die Einstellschraube 57 lässt sich der Öffnungsdruck des Überdruckventils 52 feindosiert einstellen, sodaß die Zuführung 43 erst ab dem erwünschten Überdruck, der beispielsweise bei 6 bar liegen kann, mit der Kammer 42 kommuniziert.

In der zylindrischen Kammer 42 ist ein kegelförmiges Dichtelement 44 unter Einwirkung der schematisch dargestellten Druckfeder 45 an dessen linker Stirnseite in dichtendem Anschlag gehalten. Das Dichtelement 44 ist an dem rechten, radial verjüngten Teil des stabförmigen pneumatischen Steuerorgans 37 längsverschieblich so befestigt, daß beim Eindrücken des Bedienelementes 8 in die Stellung S2+3 zwar das kegelförmige Dichtelement 38 nicht mehr stirnseitig anliegt, jedoch noch kein Öffnen des Dichtelements 44 entgegen der Kraft der Druckfeder 45 erfolgt ist. Bei weiterem Eindrücken des Bedienelementes 8 in die Stellung S4 wird das Dichtelement 44 durch den radial erweiterten Bereich des Bedienelementes 37 stirnseitig erfaßt und so nach rechts bewegt, daß der Zugang zum Mehrfunktionsventil 34 freigegeben wird.

Durch die radial abgedichtete Halterung des Steuerorgans 37 im Gehäuse der pneumatischen Steuerungsbaugruppe 9 wird ungewolltes Austreten von Fluid vermieden und es kann der verstehend beschriebene Druckaufbau in der oberen Endstellung der Zugstange 21 für das Abdrehen des Haltegliedes 7 genutzt werden.

Die verschiedenen aufeinanderfolgenden, den einzelnen Funktionsabläufen zugeordnete Betätigungsstellungen S0 bis S4 sind taktil für den Bediener einfach durch einen jeweils stufenweise zunehmenden Kraftanstieg zu erfassen.

In der Stellung S0 wirkt auf das Betätigungselement 8 lediglich die Kraft des Schaltarms 46 der elektrischen Schalteinrichtung 10, dessen Betätigung bei dem in Fig. 3 dargestellten Versorgungsgerät 47 für das elektrische Schweißen die Bereitschaft zum Zuführen des Schweißstroms auslöst.

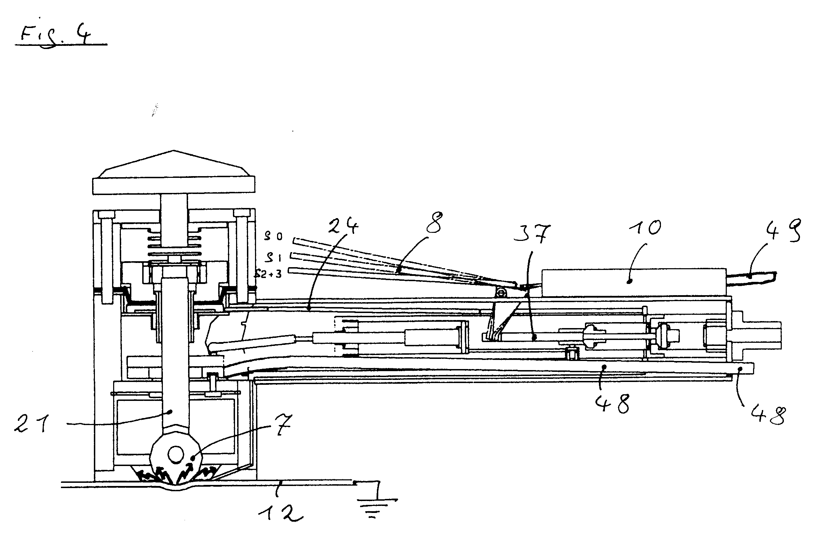

Hierbei wird in Stellung S1 des Bedienelementes 8 die in Fig. 4 dargestellte vorgeschobene Stellung der Zugstange 21 eingenommen. Bei Berührung des mit Masse des Schweißpotentials verbundenen, zu verformenden Bauteils 12 mit dem Halteglied 7, fließt über die mit der Zugstange 21 leitend verbundene elektrische Zuleitung 48 ein Schweißstrom, der das momentane Anschweißen des Haltegliedes 7 am Bauteil 12 bewirkt.

Zur Vermeidung von spannungsführenden von außen zugänglichen Teilen ist die Zugstange 21 innerhalb des Kopfteils 2 elektrisch isoliert gehalten oder ist die gesamte Vorrichtung 1 von einem isolierenden Gehäusemantel umgeben. Die Zuführung des Schweißstroms von der flexiblen Zuleitung 48 zur Zugstange 21 kann durch eine elastische Kabelführung oder wie vorstehend beschriehen durch einen fest angebrachten verdrehbaren Teller erfolgen.

Das Versorgungsgerät 47 kann hierbei ein beliebiges handelsübliches, für das elektrische Schweißen geeignetes Gerät, wie beispielsweise ein Schweißtransformator, mit entsprechender, elektrischer Steuerung sein.

In weiterer Ausgestaltung umfaßt das Versorgungsgerät 47 jedoch eine einstellbare elektrische Steuereinrichtung, die im Bauteil 12 zu einem definiert einstellbaren Wärmeeintrag mit vorgebbarem Zeitverhalten führt, der eine definierte Erwärmung während und/oder nach dem Anschweißen des Haltegliedes 7 bewirkt.

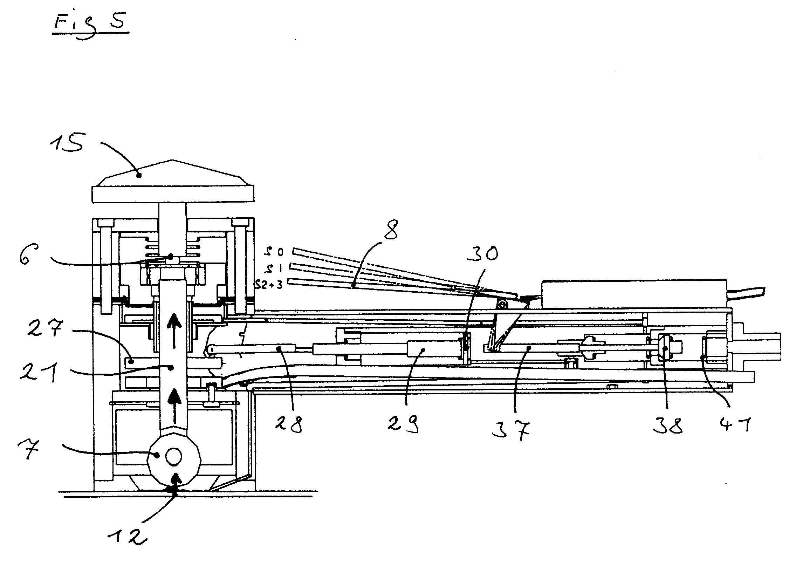

Nach dem Anschweißen in Stellung S1 und beim weiteren Eindrücken des Bedienelementes 8 in die Stellung S2+3 wird, wie in Fig. 5 dargestellt, das pneumatische Steuerungsorgan 37 unter der zusätzlichen Krafteinwirkung der Druckfeder 41 so verschoben, daß das Öffnen des Dichtelementes 38 die Druckbeaufschlagung des zylindrischen Raums 23 und das Zurücktreten der Zugstange 21 bis zum Tiefenanschlag 6 bewirkt. Hierdurch wird die durch das Anschweißen erwärmte Stelle des Bauteils 12 unmittelbar im erhitzten Zustand definiert gezogen und rückverformt.

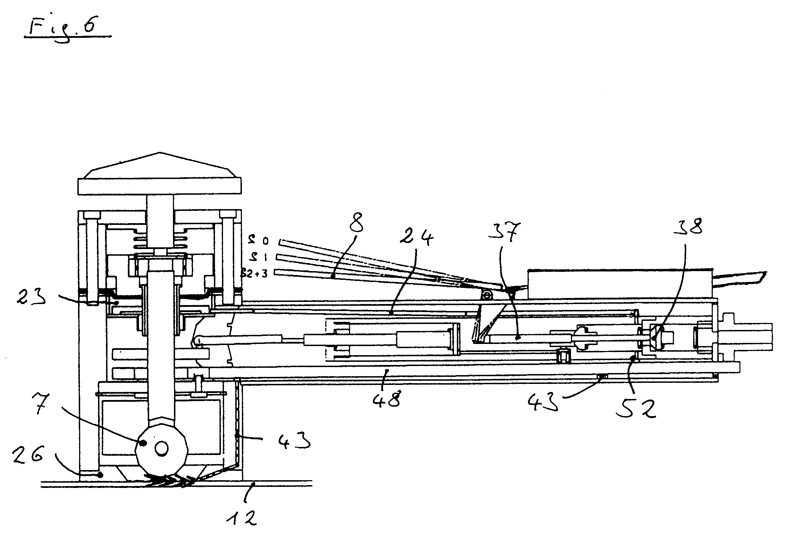

Die Zuleitung 43 zum Fußteil 26 sowie die Zuleitung 24 zum zylindrischen Raum 23 sind bei der ersten Ausführungsform ohne das zusätzliche Überdruckventil 52 so ausgebildet, daß zunächst während der Verschiebung des Kolbens 18 und der Zugstange 21 nur in geringer Menge Kühlluft und durch den Druckanstieg beim Erreichen der Endstellung eine wesentlich erhöhte Menge Kühlluft zugeführt wird, siehe hierzu Fig. 6.

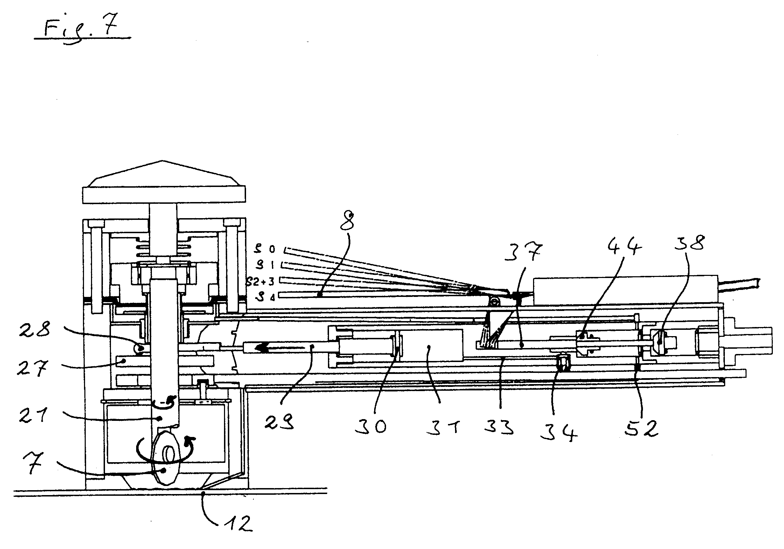

Alternativ unterbindet bei der zweiten Ausführungsform das Überdruckventil 52, dessen Lage jedoch nicht körperliche Ausbildung in den Figuren 6 und 7 dargestellt ist, in der Leitung 43 ein Zuführen von Kühlluft vor Erreichen der Endstellung ganz.

Bei weiterem Eindrücken des Bedienelementes 8 in die in Fig. 7 dargestellte Stellung S4 wird die Verbindung zum Mehrfunktionsventil 34 entgegen der taktil wahrnehmbaren zusätzlichen Kraft der Druckfeder 45 freigegeben und es erfolgt der beschriebene Druckanstieg, der zu einem Abdrehen des Haltegliedes 7 vom Bauteil 12 führt.

Die Zuführungen 23, 33 und 43 können so dimensioniert werden, daß auch ein unkundiger Bediener, der das Bedienelement 8 sofort nach dem Anschweißen vollständig bis zur Stellung S4 durchdrückt, ein optimales Rückverformungsergebnis erhält. Hierzu sind die jeweiligen Zuleitungen 24, 33, 43 so ausgebildet oder mit Düsen bzw. Drosseln bestückt, daß der sich einstellende langsame Druckanstieg zunächst zu einem sanften Zurücktreten der Zugstange 21 führt, sich danach die Kühlluftzufuhr einstellt und anschließend das Abscheren des Haltegliedes 7 erfolgt. Es ergibt sich somit durch die pneumatische Steuereinrichtung 9 eine Automatisierung, die den Ablauf der Funktionen Anschweißen, Ziehen, Kühlen, Abdrehen und/oder Rückkehr in die Anfangsposition mit optimiertem Zeitverhalten bewirken kann.

In weiterer Ausgestaltung kann ein in den Figuren nicht dargestellter elektromechanischer Aktuator die Einnahme der verschiedenen Stellungen des pneumatischen Steuerungsorgans 37 hervorrufen, so daß die Vorrichtung 1 elektrisch steuerbar ist. In diesem Fall kann die Zuleitung 49 Steuerungsleitungen für die Aktuatoren enthalten und das Versorgungsgerät 47 die entsprechenden elektrischen und elektronischen Steuerungsbaugruppen umfassen.

Beim Loslassen des Bedienelementes 8 tritt dieses in die Stellung S0 und treten die Dichtelemente 38 und 44 in die dichtende Ausgangsposition zurück. Die Luft entweicht dem zylindrischen Raum 23 entlang der Zuleitung 24 in die Kammer 42, von wo aus diese durch die Zuleitung 43 zum Fußteil 26 geführt ist und dort austritt. Somit befindet sich die Vorrichtung 1 in ihrem Ausgangszustand und ist für weitere Bearbeitungsvorgänge nutzbar.

## Patentansprüche

1. Vorrichtung (1) zum Verformen von dünnwandigen Bauteilen (12), zum Beheben von Schäden an Autokarosserieteilen (12), mit einem an dem zu verformenden Bauteil (12) anschweißbaren, **an einem Ende einer Zugstange (21) angeordneten** Halteglied (7), und einer Zugvorrichtung (4) zum Aufbringen von Zugkräften auf das Halteglied (7), wobei die Zugvorrichtung (4) motorisch betätigbar ist und ein zu verformender Teil des Bauteils (12) nach dem Anschweißen des Haltegliedes (7) durch die Zugvorrichtung (4) motorisch betätigt in eine vorgebbare Endstellung bringbar ist,
gekennzeichnet durch einen **am anderen Ende der Zugstange (21) angeordneten** einstellbaren Tiefenanschlag (6), mit welchem das Nullniveau der ursprünglichen Karosserieteile oder auch ein definiertes Überstrecken, mit welchem der Ziehtiefe des Schadens entsprechend Rechnung getragen werden kann, für jeden Vorgang einstellbar ist, zum Erreichen einer definierten Endstellung der Zugvorrichtung (4).

2. Vorrichtung nach Anspruch 1,
gekennzeichnet durch eine Einrichtung (13) zum Zuführen von Kühlmittel, insbesondere von Luft, zu dem erwärmten rückverformten Teil des Bauteils (12).

3. Vorrichtung nach Anspruch 1 oder 2,
gekennzeichnet durch eine motorische betätigte Einrichtung (5) zum Lösen des angeschweißten Haltegliedes (7).

4. Vorrichtung nach einem der vorstehenden Ansprüche,
gekennzeichnet durch ein einziges, manuell betätigbares Bedienungselement (8) für die Funktionsabläufe Anschweißen, Ziehen, Kühlen, Abdrehen und/oder Rückkehr in die Anfangsposition.

5. Vorrichtung nach Anspruch 4,
dadurch gekennzeichnet, daß das manuell betätigbare Bedienungselement (8) den einzelnen Funtkionsabläufen zugeordnete Betätigungsstellungen (SO, S1, S2+3, S4) umfasst.

6. Vorrichtung nach einem der vorstehenden Ansprüche, insbesondere nach den Ansprüchen 4 oder 5,
gekennzeichnet durch eine in einem Griffteil (2) der Vorrichtung (1) angeordnete pneumatische Steuerungsbaugruppe (9), welche pneumatische Steuerungsvorgänge durch die axiale Stellung eines einzigen pneumatischen Steuerungsorgans (37) bewirkt.

7. Vorrichtung nach einem der vorstehenden Ansprüche,
gekennzeichnet durch eine Einrichtung (14), die bei Erreichen der Endstellung der Zugvorrichtung (4) die Zufuhr von Kühlluft und/oder das Lösen des Haltegliedes (7) vom Bauteil (12) bewirkt.

8. Vorrichtung nach Anspruch 7,
dadurch gekennzeichnet, daß die Einrichtung (14) zumindest ein Überdruckventil (34, 52) aufweist, das bei ansteigendem Druck in der Endstellung der Zugvorrichtung (4) öffnet und den Austritt von Kühlluft und/oder das Lösen des Haltegliedes vom Bauteil (12) bewirkt.

9. Vorrichtung nach einem der vorstehenden Ansprüche,
dadurch gekennzeichnet, daß das Ziehen des Haltegliedes (7) nach dem Anschweißen ruckfrei erfolgt, wofür insbesondere eine Drossel in einer pneumatischen Zuleitung (24) zu der Zugvorrichtung (4) angeordnet ist.

10. Vorrichtung nach einem der vorstehenden Ansprüche,
dadurch gekennzeichnet, daß eine elektrische und/oder pneumatische Steuereinrichtung (9) einen automatisierten Ablauf der Funktionsabläufe Anschweißen, Ziehen, Kühlen, Abddrehen und/oder Rückkehr in die Anfangsposition bewirkt.

11. Vorrichtung nach einem der vorstehenden Ansprüche,
dadurch gekennzeichnet, daß die Zugvorrichtung (4) sich beim Ziehen mit einem oder mehreren einsetzbaren Fußteilen (26) mit auswählbarer Auflageform gegen das Bauteil (12) abstützt.

12. System zur Bearbeitung von dünnwandigen Bauteilen,
insbesondere zum Beheben von Schäden an Autokarosserien (12), umfassend eine Vorrichtung nach einem der Ansprüche 1 bis 11 sowie ein Versorgungsgerät (47) für das elektrische Schweißen des Haltegliedes (7) an das Bauteil (12).

13. System nach Anspruch 12,
dadurch gekennzeichnet, daß das Versorgungsgerät (47) einen einstellbaren Wärmeeintrag mit vorgebbarem Zeitverhalten bewirkt, der zu einer einstellbaren Erwärmung während und/oder nach dem Anschweißen des Haltegliedes (7) führt.

## Claims

1. A device (1) for shaping thin-walled components (12) for repairing damage to car body parts (12), comprising a retaining element (7) disposed on one end of a pull rod (21) and weldable to the component (12) for shaping, and a pulling device (4) for applying pulling forces to the retaining element (7), the pulling device (4) being adapted to be kinetically actuated and a part of the component (12) for shaping being adapted to be brought into a presettable end position by the kinetic actuation of the pulling device (4) after the retaining element (7) has been welded on, characterised by an adjustable depth abutment (6) disposed at the other end of the pull rod (21), whereby the zero level of the original body parts or a defined overshoot for allowing for the depth to which the damaged part has to be pulled can be set for each operation, in order to reach a defined end position of the pulling device (4).

2. A device according to claim 1, characterised by a means (13) for supplying cooling agent, particularly air, to the heated re-shaped part of the component (12).

3. A device according to claim 1 or 2, characterised by a kinetically actuated means (5) for releasing the welded-on retaining element (7).

4. A device according to any of the preceding claims, characterised by a single manually-actuated operating element (8) for the functional sequences of welding on, pulling, cooling, turning off and/or return to the starting position.

5. A device according to claim 4, characterised in that the manually actuated operating element (8) comprises actuating positions (SO, S1, S2+3, S4) associated with the individual functional sequences.

6. A device according to any of the preceding claims, more particularly according to claim 4 or 5, characterised by a pneumatic control sub-assembly (9) which is disposed in a handle part (2) of the device (1) and effects pneumatic control operations via the axial position of a single pneumatic control means (37).

7. A device according to any of the preceding claims, characterised by a means (14) which when the pulling device (4) reaches the end position supplies cooling air and/or releases the retaining element (7) from the component (12).

8. A device according to claim 7, characterised in that the means (14) comprises at least one relief valve (34, 52) which when the pressure rises in the end position of the pulling device (4) opens and releases cooling air and/or releases the retaining element from the component (12).

9. A device according to any of the preceding claims, characterised in that after the welding on operation, the retaining element (4) is pulled smoothly, more particularly by means of a restrictor disposed in a pneumatic feed line (24) to the pulling device (4).

10. A device according to any of the preceding claims, characterised in that an electric and/or pneumatic control device (9) automates the functional sequences of welding on, pulling, cooling, turning off and/or return to the starting position.

11. A device according to any of the preceding claims, characterised in that during pulling the pulling device (4) is braced against the component (12) by one or more insertable foot parts (26) of selectable contact shape.

12. A system for machining thin-walled components, more particularly for repairing damage to car bodies (12), comprising a device according to any of claims 1 to 11 and a supply unit (47) for electric welding of the retaining element (7) to the component (12).

13. A system according to claim 12, characterised in that the supply unit (47) supplies an adjustable amount of heat for a presettable time, resulting in adjustable heating during and/or after the welding on of the retaining element (7).

## Revendications

1. Dispositif (1) de déformation d'éléments (12) de faible épaisseur destiné à la réparation de dommages d'éléments (12) de carrosserie de voiture, comportant un organe de retenue (7) pouvant être soudé sur l'élément (12) à déformer, qui est disposé sur une extrémité d'une tige de traction (21), et un dispositif de traction (4) destiné à l'application de forces de traction sur l'organe de retenue (7), le dispositif de traction (4) pouvant être actionné par moteur, et une partie de l'élément (12) à déformer pouvant être placée dans une position finale prédéfinie par le dispositif de traction (4) actionné par moteur après le soudage de l'organe de retenue (7),
caractérisé par une butée de profondeur (6) réglable disposée sur l'autre extrémité de la tige de traction (21), avec laquelle le niveau zéro des éléments initiaux de carrosserie, ou également un excès d'allongement défini qui permet de tenir compte de la profondeur d'emboutissage correspondante du dommage, peut être réglé pour chaque processus dans le but d'atteindre une position finale définie du dispositif de traction (4).

2. Dispositif selon la revendication 1,
caractérisé par un dispositif (13) destiné à amener un agent de refroidissement, notamment de l'air, à la partie chauffée déformée en retour de l'élément (12).

3. Dispositif selon la revendication 1 ou 2,
caractérisé par un dispositif (5) pouvant être actionné par moteur destiné à la dissociation de l'organe de retenue (7) soudé.

4. Dispositif selon l'une quelconque des revendications précédentes,
caractérisé par un seul élément de commande (8) pouvant être actionné manuellement pour les processus fonctionnels de soudage, d'emboutissage, de refroidissement, de retrait et/ou de retour dans la position initiale.

5. Dispositif selon la revendication 4,
caractérisé en ce que l'élément de commande (8) pouvant être actionné manuellement comporte des positions d'actionnement (S0, S1, S2+3, S4) associées aux différents processus fonctionnels.

6. Dispositif selon l'une quelconque des revendications précédentes, notamment selon les revendications 4 ou 5,
caractérisé par un module de commande pneumatique (9) disposé dans un élément de poignée (2) du dispositif (1), qui provoque des processus de commande pneumatique par le positionnement axial d'un seul organe de commande pneumatique (37).

7. Dispositif selon l'une quelconque des revendications précédentes,
caractérisé par un dispositif (14) qui provoque l'amenée d'air de refroidissement et/ou la dissociation de l'organe de retenue (7) de l'élément (12) lorsque le dispositif de traction (4) atteint sa position finale.

8. Dispositif selon la revendication 7,
caractérisé en ce que le dispositif (14) comporte au moins une soupape de surpression (34, 52) qui s'ouvre lors de la montée en pression dans la position finale du dispositif de traction (4), et qui provoque la sortie d'air de refroidissement et/ou la dissociation de l'organe de retenue de l'élément (12).

9. Dispositif selon l'une quelconque des revendications précédentes,
caractérisé en ce que l'emboutissage de l'organe de retenue (7) est effectué sans à-coups après le soudage, un organe d'étranglement étant notamment disposé à cet effet dans une conduite d'alimentation pneumatique (24) du dispositif de traction (4).

10. Dispositif selon l'une quelconque des revendications précédentes,
caractérisé en ce qu'un dispositif de commande électrique et/ou pneumatique (9) provoque un déroulement automatisé des processus fonctionnels de soudage, d'emboutissage, de refroidissement, de retrait et/ou de retour dans la position initiale.

11. Dispositif selon l'une quelconque des revendications précédentes,
caractérisé en ce que, lors de l'emboutissage, le dispositif de traction (4) prend appui sur l'élément (12) par une ou plusieurs parties formant pied (26) dont la forme d'application peut être choisie.

12. Système destiné au traitement d'éléments de faible épaisseur, notamment à la réparation de dommages de carrosseries (12) de voiture, comportant un dispositif selon l'une quelconque des revendications 1 à 11, ainsi qu'un appareil d'alimentation (47) pour le soudage électrique de l'organe de retenue (7) sur l'élément (12).

13. Système selon la revendication 12,
caractérisé en ce que l'appareil d'alimentation (47) assure un apport de chaleur réglable avec un comportement dans le temps pouvant être prédéfini, qui conduit à un chauffage réglable pendant et/ou après le soudage de l'organe de retenue (7).
